Europäisches Patentamt

European Patent Office

Office européen des brevets

(11) Publication number: 0 390 754
A2

# EUROPEAN PATENT APPLICATION

(21) Application number: 90830118.7

(22) Date of filing: 20.03.90

(51) Int. Cl.⁵: A22C 7/00

(30) Priority: 29.03.89 IT 4005189

(43) Date of publication of application:
03.10.90 Bulletin 90/40

(84) Designated Contracting States:
BE DE ES FR GB NL

(71) Applicant: Goldoni, Paolo
Via Parigi, 17
I-43100 Parma(IT)

(72) Inventor: Goldoni, Paolo
Via Parigi, 17
I-43100 Parma(IT)

(74) Representative: Lanzoni, Luciano
c/o BUGNION S.p.A. Viale Trento Trieste, 25
I-41100 Modena(IT)

(54) An automatic press for cooked meat moulds.

(57) Falling within the art field of equipment used in manufacturing cooked meats, the press comprises a ram (14) with contact rods (15) operated by a fluid power cylinder (16) and designed to bear down on the lid (2) of a mould (3) containing meat to be forced into shape; the mould is positioned beneath the rods (15) by an alignment mechanism (18) which also holds the fasteners (2b) of the lid firmly against the sides of the mould during the forcing stroke.

**fig.1**

The present invention relates to an automatic press for forcing moulds as used in manufacturing boiled ham and similar products.

Conventionally, when pressing cooked meats such as leg and shoulder of ham etc., use is made of shaped bowls and matching lids, the lid being proportioned so as to penetrate into the bowl when pressure is applied from above.

The lid is secured to the bowl, or mould, by means of two conventional inward-facing rack fasteners, which must be held against the mould during the forcing stroke so as to engage respective catches. The operation is effected utilizing a conventional type of press, consisting in a pillar carrying an overhung head beneath which the moulds are set in position by a conveyor.

The head carries a descending ram, operated by hydraulic or pneumatic cylinders and fitted with rigid contact rods by which pressure is applied to the lid of the mould.

To effect a pressing, the mould must first be set in alignment with the contact rods by an operator to ensure that pressure will be distributed over the entire lid uniformly when force is applied. In addition, the operator must continue to keep the rack fasteners tightly against the mould so that, on completion of the pressing stroke and removal of the mould from the press, the lid will stay locked in position, forced down onto the meat, for as long as is required to effect the subsequent cooking, re-pressing and cooling operations.

The operator is therefore entrusted with two tasks, i.e. one of aligning the mould for pressing, the other, of applying pressure to the rack fasteners. Notable limitations are imposed on manufacturing output by these two manual operations; accordingly, the object of the present invention is to bring about a significant increase in production capacity of the conventional press.

The problem addressed by the present invention in achieving such an object is one of automating two operations, namely: alignment of the mould with the contact rods, and maintaining the rack fasteners of the lid in a position of positive engagement with the mould.

The stated object is comprehensively realized with an automatic press according to the invention, which is of the general type used to force moulds containing cooked meats, comprising a overhung head mounted to a pillar and carrying a descending ram, operated by hydraulic or pneumatic cylinders and fitted with contact rods designed to impinge on a lid secured to the mould by way of rack fasteners, and is characterized in that it further comprises means by which to align the mould in relation to the contact rods of the ram, and means by which to sense the arrival of the mould beneath the ram and trigger operation of the alignment means.

The invention will now be described in detail, by way of example, with the aid of the accompanying drawings, in which:

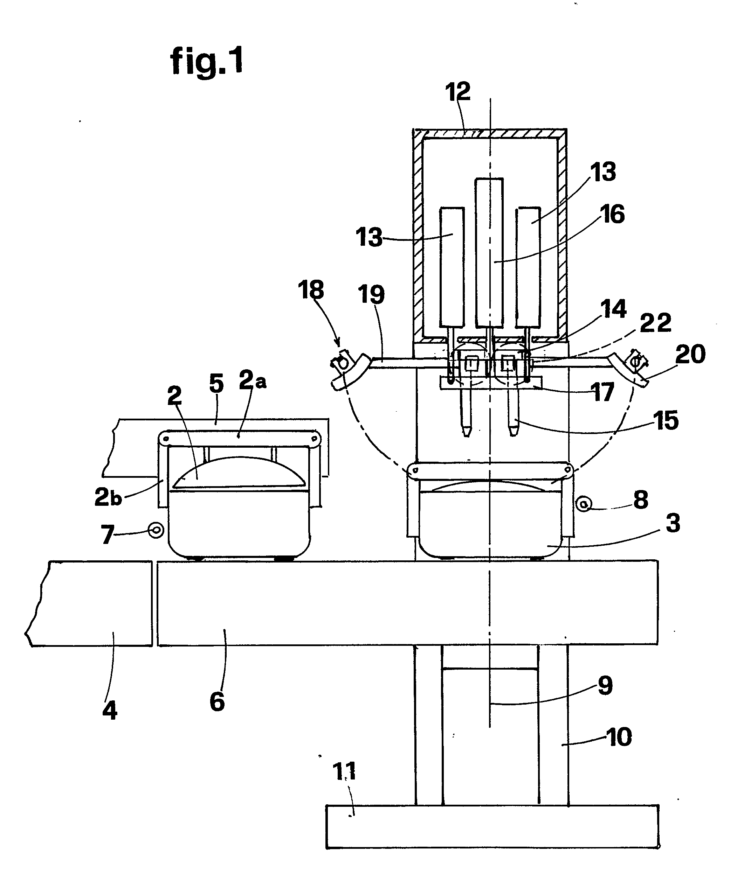

-fig 1 is a schematic representation of the press, viewed in front elevation;

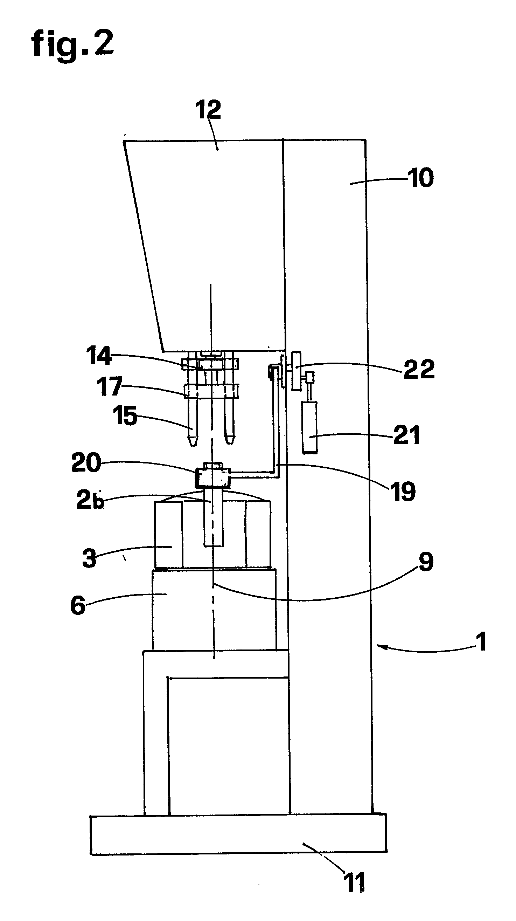

-fig 2 is a side elevation of the press showing the alignment means in engagement with the mould. With reference to the drawings, 1 denotes a press, in its entirety, designed to impinge on the lid 2 of a mould 3, the approach of the mould toward the press being made on a conveyor 4 with lateral guide fences 5.

The lid 2 is fitted with a conventional fastening mechanism, consisting in a crossbar 2a with two hinged racks 2b engaged by catches on the mould. The mould 3 passes from the approach conveyor 4, by which the moulds are also distanced one from the next, to a further conveyor 6.

7 and 8 respectively denote a photocell positioned at the start of the press conveyor 6 and excited by the passage of the incoming mould 3, and a further photocell located beyond the pressing axis 9. The press 1 comprises a pillar 10 rigidly attached to a base 11 and carrying a head 12 uppermost. The head accommodates a first ram 14 carrying four rods 15 and operated by a cylinder 16 which, when extended, causes the rods to enter into contact with the lid of the mould.

Also accommodated by the head 12 are two further cylinders 13 serving to operate a second ram 17 by which pressure is applied to the crossbar 2a of the lid, hence to the rack fasteners 2b.

The pillar also carries means, denoted 18 in their entirety, which serve to align the mould with the contact rods 15 of the first ram 14, such means comprise two arms 19, and two grippers 20 attached one to the projecting end of each arm 19.

21 denotes a cylinder located internally of the pillar and operating a pair of gears 22 connected with and serving to time the movement of the two arms 19.

Operation of the press will now be described.

Moulds are supplied to the press from the approach conveyor 4, guided by the fences 5.

Running onto the press conveyor 6, the mould 3 passes over and darkens the first photocell 7; the subsequent return of the photocell to its former state causes the approach conveyor 7 to shut off so that no further moulds are admitted.

Continuing forward on the press conveyor 6, the mould will darken the second photocell 8, whereupon this conveyor too shuts off and the pressing cycle is set in motion.

The mould is now positioned by the alignment means, with the cylinder 21 operating the timing gears 22 to draw the arms 19 together concentrically in such a way that the grippers 20 are positioned against the fasteners 2b, exerting a controlled pressure.

At this point, the mould is centrally aligned in relation to the pressing station, as defined by the axis denoted 9, and the first ram 14 will descend under the force of the relative cylinder, bringing the contact rods down onto the lid 2; at the same time, the second ram 17 will operate in order to apply pressure to the crossbar, and by way of the crossbar, to the rack fasteners 2b.

Once the prescribed force has been applied, the mould is released, whereupon the two conveyors will be set running and a further mould brought up to the press in the manner described.

It will be observed that the second photocell 8 serves both as a means of sensing the arrival of a mould beneath the rams, and of triggering operation of the alignment means.

Needless to say, the alignment means 18 might be embodied other than as described and illustrated, without prejudice to the scope of the appended claims.

## Claims

1) An automatic press for forcing moulds containing legs or shoulders of ham or similar cooked meats, comprising a overhung head mounted to a pillar and carrying a descending ram, operated by hydraulic or pneumatic cylinders and fitted with contact rods designed to impinge on a lid (2) that is secured to the mould (3) by way of rack fasteners (2b), characterized
in that further comprises:
-means (18) by which to align the mould in relation to the contact rods (15) of the ram (14); and
-means (8) by which to sense the presence of the mould beneath the ram and trigger operation of the alignment means.

2) A press as in claim 1, wherein alignment means (18) comprise two arms (19) carrying two respective grippers (20) at their projecting ends and set in motion under controlled pressure by a hydraulic or pneumatic cylinder (21) operating two gears (22).

3) A press as in claim 1, wherein sensing means (8) consist in a photocell, positioned so as to respond to the presence of the mould when substantially in alignment with the axis of the ram (14).

# fig.1

# fig.2